(19) Europäisches Patentamt
European Patent Office
Office européen des brevets

(11) **EP 1 760 926 A1**

(12) **EUROPEAN PATENT APPLICATION**

(43) Date of publication:
**07.03.2007 Bulletin 2007/10**

(51) Int Cl.:
***H04L 1/18*** (2006.01)

(21) Application number: **05019124.6**

(22) Date of filing: **02.09.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **SIEMENS AKTIENGESELLSCHAFT**<br>**80333 München (DE)** | (72) Inventors:<br>• **Bossert, Martin, Prof.**<br>**89075 Ulm (DE)**<br>• **Costa, Elena , Dr.**<br>**81739 München (DE)**<br>• **Lott, Matthias**<br>**82061 Neuried (DE)**<br>• **Schulz, Egon, Dr.**<br>**80993 München (DE)**<br>• **Weckerle, Martin, Dr.**<br>**89077 Ulm (DE)** |

(54) **Method and system for error-protection employing the Plotkin construction using LDPC codes for packet-based data transmission**

(57) Packet-based data transmission method including an encoding by a LDPC code and a corresponding decoding, wherein two consecutive packets, each being encoded by a LDPC code, are connected such that, if for at least one of the two packets a decoding failure occurs, this packet can be likely decoded with the help of the other packet.

**Description**

In most current communication systems data are transmitted in packets. To ensure reliability forward error connection (FEC) and automatic repeat request (ARQ) are used. Thereby the goal is to maximize the throughput and minimize the delay. For FEC, recently powerful LDPC codes [1] are used. The decoding of LDPC codes has the property that, if a solution is found it is correct, otherwise a decoding failure occurs [2]. In the latter case, the packet has to be sent again, so increasing the delay. Instead, a more powerful code with smaller rate could be used, but this would decrease the throughput.

In this regard an encoding approach would be desired that enables the elimination of a decoding failures, while avoiding complete packet retransmission and keeping at the same time the rate degradation very low.

The complete retransmission of a "not acknowledged" packet can be avoided by means of a Type II Hybrid ARQ scheme, also referred to as incremental redundancy [3]. In such scheme, instead of retransmitting the original packet, only new additional redundancy is transmitted. This is possible by using so-called rate compatible (RC) codes, that is a set of codes of equal dimension (information length) that span a range of code rates and have the special property that each codeword is a part of one codeword in all codes with lower rates. In the first transmission, the codeword corresponding to the highest code rate, i.e. with the shortest redundancy part, is transmitted. In every retransmission, only additional redundancy of the codeword, corresponding to the code with next lower rate, is transmitted.

This method allows increasing the redundancy stepwise, so avoiding unnecessary throughput reduction. However, as explained in the attached report [4], constructions of rate-compatible LDPC codes, e.g. by puncturing, are still quite limited.

It is, therefore, an object of the present invention to provide for an improved data transmission method and system which in particular allows for a simple elimination of decoding failures in a disturbed transmission, with a minimum of delay.

This object is solved by a data transmission method of claim 1, as well as by a data transmission system of claim 3 Preferred embodiments of the invention are subject of the dependent claims.

The invention includes the basic idea of providing for an encoding method that enables the recovery of a packet for which a decoding failure occurred. Specifically, it is a basic idea of the invention to connect two consecutive packets each encoded by a LDPC code such that, if for one of the two a decoding failure occurs, it can be likely decoded with the help of the other and no retransmission is necessary, thus the delay is decreased.

The encoding approach is as follows. Let

$C_u(n,k_u,d_u)$ and $C_v(n,k_v,d_v)$
be two LDPC codes of length $n$, dimension $k_u$ and $k_v$ and minimum distance $d_u$ and $d_v$, respectively. We require that

$$C_v \subset C_u \tag{1}$$

so that the rate $R_v = k_v/n$ of $C_v$ is slightly smaller than the rate $R_u = k_u/n$ of $C_u$. At the same time, the minimum distance $d_v > d_u$, or, in other words, the code $C_v$ can correct more errors than $C_u$. Another consequence is:

$$u \in C_u, v \in C_v \Rightarrow u+v \in C_u \tag{2}$$

According to a preferred embodiment of the invention, the two packets are encoded in a way that resembles Plotkin construction [5]:

Let $a_u$ be the first packet with $k_u$ information bits and $a_v$ be the second packet with $k_v$ information bits.

- Firstly the two packets are encoded as: $a_u \rightarrow u$ and $a_v \rightarrow v$
- Secondly, the two code-words $u$ and $u+v$ are transmitted.

Different from decoding of codes obtained with Plotkin construction, requirement (1) (and consequently (2)) allows to decode each packet by a decoder $\varphi_u$ for the code $C_u$. Four cases may be distinguished:

1. Both packets are decoded successfully
2. First packet has decoding failure and second is decoded successfully
3. Second packet has decoding failure and first is decoded successfully
4. Both packets have decoding failure.

In order to describe the algorithm for the four cases, the following error model is introduced:

Let $f$ be the error occurred at packet $u$ and e the error at packet $u+v$, thus the received data are $u+f$ and $u+v+e$.

The received sequences results to be

$$u_1 + f_1 \big| u_1 + v_1 + e_1 \big| u_2 + f_2 \big| u_2 + v_2 + e_2 \big| ..........$$

Case 1:

$$\varphi_u(u + f) = \hat{u} \; , \quad \varphi_u(u + v + e) = \tilde{u} + \tilde{v}$$

if $\hat{u}+\tilde{u}+\tilde{v} \in C_v$ then decoding is $\hat{u}$ and $\hat{u}+\tilde{u}+\tilde{v}$, else a decoding failure is occurred and a new transmission is required.

Case 2:

$$\varphi_u(u + f) = failure, \varphi_u(u + v + e) = \tilde{u} + \tilde{v}$$

Then $u+f+\tilde{u}+\tilde{v}=\tilde{v}+f$ is decoded with a decoder $\varphi_v$ for code $C_v$. Clearly, $\tilde{u}=u$ in case of correct decoding of $\varphi_u$ $(u+v+e)$. Here, the property of LDPC codes is exploited that, if a solution is found it is correct, otherwise a decoding failure occurs. Hence,

$$\varphi_v(u + f + \tilde{u} + \tilde{v}) = \hat{v}$$

Indeed, if the code $C_u$ was not able to correct the error $f$, the code $C_v$ is most likely able to manage it, since $d_v > d_u$ from (1). The decoding decision is $\tilde{v}$ and $\tilde{u}+\tilde{v}+\hat{v}$.

Case 3:

$$\varphi_u(u + f) = \hat{u} \; \text{ and } \; \varphi_u(u + v + e) = failure$$

Then we decode $\hat{u}+u+v+e=v+e$ with a decoder $\varphi_v$ for code $C_v$.

$$\varphi_v(u+e)=\hat{v}$$

Again, since from (1), $d_v > d_u$ the code $C_v$ is most likely able to correct the error e. The decoding decisions are $\hat{u}$ and $\hat{v}$.

Case 4:

In this case, a retransmission is required.

A major advantage of the new code construction is that, if for a transmitted packet a decoding failure occurs, due to the variability of the number of errors in the channel, the decoding is still possible with the help of the second concatenated transmitted packet. Typically, only a few errors occur in the channel more than those which could be corrected by the chosen code $C_u$. Hence, the resort to a slightly stronger code, i.e. $C_v$, for the encoding of one of the two original data packets which are concatenated in the transmit packets, likely guarantees successful decoding. This requires only a small degradation of the overall code rate, i.e. $\dfrac{k_u + k_v}{2n}$ instead of $\dfrac{2k_u}{2n}$ is sufficient to decrease the delay.

From a decoding perspective, an advantageous construction of the two LDPC codes $C_u$ and $C_v$ is obtained by letting the parity check matrix $H_v$ of the code $C_v$ be related to the parity check matrix $H_u$ of the code $C_u$ through $H_v = \begin{pmatrix} H_u \\ \hline H_y \end{pmatrix}$, where $H_y$ represents additional parity checks.

It is advantageous then to choose $H_y$ in such a way that the performance of the two codes do not differ too much, i.e. their BER curves are related as in the attached plot B rather than as in a plot A, so that a slightly higher robustness of code $C_v$ is obtained without a too high code rate reduction.

References:

[1] R.L. Urbanke, T.J. Richardson, M.A. Shokrollahi, "Design of capacity-approaching irregular low density parity check codes". IEEE Trans. on Information Theory, 47 (2): 619-637, Feb. 2001

[2] M.P.C. Fossorier, M. Mihaljevic and H. Imai, "Reduced Complexity Iterative Decoding of Low Density Parity Check Codes Based on Belief Propagation", IEEE Transactions on Communications, 47(5), May 1999

[3] D.N. Rowitch and L.B. Milstein, "On the performance of hybrid FEC/ARQ systems using rate compatible turbo (RCPT) codes", IEEE Trans. on Commun. 48: 948-959, June 2000

[4] S. Stiglmayr, M. Bossert, "Rate Compatible Low Density Parity Check Codes", Siemens Internal Report, June 2005

[5] M. Bossert. Channel Coding for Telecommunications. John Wiley and Sons, 1999

**Claims**

1. Packet-based data transmission method including an encoding by a LDPC code and a corresponding decoding, **characterized in that** two consecutive packets, each being encoded by a LDPC code, are connected such that, if for at least one of the two packets a decoding failure occurs, this packet can be likely decoded with the help of the other packet.

2. Packet-based data transmission method according to claim 1, **characterized in that** the two packets are encoded basically in accordance with a Plotkin construction, wherein if $a_u$ is the first packet with $k_u$ information bits and $a_v$ the second packet with $k_v$ information bits, the two packets are encoded as $a_u \rightarrow u$ and $a_v \rightarrow v$ and the two code-words $u$ and
$u(+v)$ are transmitted, and
it is required that holds:
$C_v \subset C_u$,
$u \in C_u, v \in C_v \Rightarrow u + v \in C_u$
such that it becomes possible to decode each packet by a decoder $\varphi_u$ for the code $C_u$ or by a decoder $\varphi_v$ for the code $C_v$, wherein $C_u(n,k_u,d_u)$ and $C_v(n,k_v,d_v)$.

3. Packet-based data transmission method according to claim 1 or 2, wherein the two LDPC codes $C_u$ and $C_v$ are constructed by letting the parity check matrix $H_v$ of the code $C_v$ be related to the parity check matrix $H_u$ of the code $C_u$ through $H_v = \begin{pmatrix} H_u \\ \hline H_y \end{pmatrix}$, where $H_y$ represents additional parity checks.

4. Packet-based data transmission method according to claim 3 wherein $H_y$ is choosen in such a way that the performance of the two codes differ only slightly, so that a slightly higher rebustness of code $C_v$ is obtained, without a to high code rate reduction.

5. Packet-based data transmission system comprising encoding means and decoding means for carrying out the method according to one of the preceding claims.

**European Patent Office**

## PARTIAL EUROPEAN SEARCH REPORT

Application Number

which under Rule 45 of the European Patent Convention shall be considered, for the purposes of subsequent proceedings, as the European search report

EP 05 01 9124

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/118031 A1 (CLASSON BRIAN KEITH ET AL) 26 June 2003 (2003-06-26)<br>* paragraph [0029] *<br>* paragraph [0031] *<br>* paragraph [0065] *<br>* paragraph [0070] *<br>----- | 1,5 | H04L1/18 |
| X | KUMAR V ET AL: "On unequal error protection LDPC codes based on Plotkin-type constructions"<br>GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, 29 November 2004 (2004-11-29), pages 493-497, XP010758937<br>ISBN: 0-7803-8794-5<br>* abstract *<br>* page 493, right-hand column, paragraph 3 - paragraph 7 *<br>* page 494, right-hand column, last paragraph *<br>-----<br>-/-- | 1,2,5 | |

| | | | TECHNICAL FIELDS SEARCHED (IPC) |
|---|---|---|---|
| | | | H04L |

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 7 February 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**European Patent Office** **PARTIAL EUROPEAN SEARCH REPORT**

Application Number

EP 05 01 9124

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | DUMER I ET AL: "Near-optimum decoding for subcodes of Reed-Muller codes" PROCEEDINGS OF THE 2001 IEEE INTERNATIONAL SYMPOSIUM ON INFORMATION THEORY. ISIT 2001. WASHINGTON, WA, JUNE 24 - JUNE 29, 2001, IEEE INTERNATIONAL SYMPOSIUM ON INFORMATION THEORY, NEW YORK, NY : IEEE, US, 24 June 2001 (2001-06-24), pages 329-329, XP010552935 ISBN: 0-7803-7123-2 * page 329, section I * ----- | 1,2,5 | |
| A | KLAPPER, A.: "The Multicovering Radii of Codes" INFORMATION THEORY, IEEE TRANSACTIONS ON, vol. 43, July 1997 (1997-07), pages 1372-1377, XP011026844 * page 1373, right-hand column, paragraph 1 * ----- | 1-3,5 | **TECHNICAL FIELDS SEARCHED (IPC)** |
| A | CALDERBANK, A.R. ET AL: "Quantum Error Correction Via Codes Over GF (4)"[Online] 27 September 1997 (1997-09-27), XP002366376 Retrieved from the Internet: URL:http://www.hep.princeton.edu/~mcdonald /examples/QM/calderbank_quant-ph-9608006.p df> [retrieved on 2006-02-06] * page 18, paragraph 3 - paragraph 5 * ----- | 1-3,5 | |
| X | US 2004/228320 A1 (LAROIA RAJIV ET AL) 18 November 2004 (2004-11-18) * paragraph [0075] - paragraph [0076] * ----- | 1,3,5 | |

EPO FORM 1503 03.82 (P04C10)

**European Patent Office**

**INCOMPLETE SEARCH
SHEET C**

Application Number

EP 05 01 9124

Claim(s) searched completely:
       1-3, 5

Claim(s) not searched:
       4

Reason for the limitation of the search:

Claim 4 does not meet the requirements of Article 84 EPC as the use of the relative terms "slightly" ("differ only slightly", "so that a slightly higher robustness") and high ("without a to (too?) high reduction") fails to clearly define the scope of protection of the claim. In fact, such a term having no well-recognised meaning is not allowable according to the Guidelines, C-III-4.5. Furthermore, the description employs the same obscure terminology.

Furthermore, claim 4 should not seek to define the invention by referring to features concerning the desired effects (results) to be achieved ("wherein Hy is choosen in such a way that the performance of the two codes [...], so that a slightly higher robustness"), which is not sufficient to clearly define the scope of protection (Article 84 EPC). The claim should rather be defined by technical features, namely the method steps allowing such an effect (cf. Guidelines C-III-4.7).

Since this claim is purely defined employing these ambiguous relative features (also used in the corresponding passages of the description), no meaningful examination is possible.

EP 1 760 926 A1

European Patent
Office

Application Number

EP 05 01 9124

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

9

**European Patent Office**

**LACK OF UNITY OF INVENTION**
**SHEET B**

Application Number

EP 05 01 9124

The Search Division considers that the present European patent application does not comply with the requirements of unity of invention and relates to several inventions or groups of inventions, namely:

1. claims: 1-2, 5

   Plotkin-type construction employing LDPC codes
   ---

2. claims: 3-4

   Relationship between the parity check codes of the first and the second LDPC codes
   ---

## ANNEX TO THE EUROPEAN SEARCH REPORT
## ON EUROPEAN PATENT APPLICATION NO.

EP 05 01 9124

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2006

| Patent document cited in search report | Publication date | Patent family member(s) | | Publication date |
|---|---|---|---|---|
| US 2003118031 A1 | 26-06-2003 | AU | 2002366939 A1 | 09-07-2003 |
| | | WO | 03055122 A1 | 03-07-2003 |
| US 2004228320 A1 | 18-11-2004 | AU | 2004214394 A1 | 02-09-2004 |
| | | BR | 0407348 A | 17-01-2006 |
| | | CA | 2516492 A1 | 02-09-2004 |
| | | EP | 1597649 A2 | 23-11-2005 |
| | | WO | 2004075023 A2 | 02-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.L. URBANKE ; T.J. RICHARDSON ; M.A. SHOKROLLAHI.** Design of capacity-approaching irregular low density parity check codes. *IEEE Trans. on Information Theory,* February 2001, vol. 47 (2), 619-637
- **M.P.C. FOSSORIER ; M. MIHALJEVIC ; H. IMAI.** Reduced Complexity Iterative Decoding of Low Density Parity Check Codes Based on Belief Propagation. *IEEE Transactions on Communications,* May 1999, vol. 47 (5

- **D.N. ROWITCH ; L.B. MILSTEIN.** On the performance of hybrid FEC/ARQ systems using rate compatible turbo (RCPT) codes. *IEEE Trans. on Commun.,* June 2000, vol. 48, 948-959
- **S. STIGLMAYR ; M. BOSSERT.** Rate Compatible Low Density Parity Check Codes. *Siemens Internal Report,* June 2005
- **M. BOSSERT.** Channel Coding for Telecommunications. John Wiley and Sons, 1999